## Europäisches Patentamt

## European Patent Office

## Office européen des brevets

(19)

(11) Veröffentlichungsnummer: **0 096 355**
**B1**

(12)

# EUROPÄISCHE PATENTSCHRIFT

(45) Veröffentlichungstag der Patentschrift: **09.11.88**

(51) Int. Cl.⁴: **B 60 R 19/26**

(21) Anmeldenummer: **83105411.9**

(22) Anmeldetag: **01.06.83**

(54) **Stossfänger für Kraftfahrzeuge, insbesondere für einen Personenkraftwagen.**

(30) Priorität: **05.06.82 DE 3221293**

(43) Veröffentlichungstag der Anmeldung:
**21.12.83 Patentblatt 83/51**

(45) Bekanntmachung des Hinweises auf die
Patenterteilung:
**09.11.88 Patentblatt 88/45**

(84) Benannte Vertragsstaaten:
**FR GB IT SE**

(56) Entgegenhaltungen:
**DE-A-1 580 568**
**DE-A-2 418 459**
**DE-B-2 361 213**
**FR-A-2 198 433**

(73) Patentinhaber: **BAYERISCHE MOTOREN WERKE**
**Aktiengesellschaft**
**Postfach 40 02 40 Petuelring 130 - AJ-36**
**D-8000 München 40 (DE)**

(72) Erfinder: **Kalchschmied, Dietmar**
**Weisspfennigweg 22**
**D-8000 München 82 (DE)**
Erfinder: **Bonenberger, Hartmut, Dipl.-Ing.**
**Winterstrasse 39**
**D-8039 Puchheim (DE)**
Erfinder: **Huber, Bernd, Dipl.-Ing.**
**Lerchenauerstrasse 38**
**D-8000 München 40 (DE)**

(74) Vertreter: **Dexheimer, Rolf**
**Bayerische Motoren Werke Aktiengesellschaft.**
**Postfach 40 02 40 Petuelring 130 - AJ-31**
**D-8000 München 40 (DE)**

Courier Press, Leamington Spa, England.

EP 0 096 355 B1

## Beschreibung

Die Erfindung bezieht sich auf einen Stoßfänger der im Oberbegriff des Patentanspruchs 1 genannten und durch die DE-B-23 61 213 bekanntgewordenen Art.

Bei dem bekannten Stoßfänger ist das Gleitteil als ein gekröpfter Haltebügel ausgebildet, der ein U-förmiges, zur Karosserie hin offenes Querschnittsprofil aufweist, während das Aufnahmeteil als ein eine fensterartige Öffnung aufweisender Rechteckkörper gestaltet ist, in dessen mit Kunststoff ausgekleideter fensterartigen Öffnung das Gleitteil in Fahrzeuglängsrichtung und — da die Breitseite des Rechteckkörpers waagrecht liegt und das Gleitteil schmäler als diese ist — in Fahrzeugquerrichtung verschiebbar ist. Die so gestaltete Halterung der Stoßfänger-Endteile hat den Nachteil, daß bei einem auf sie etwa in Fahrzeugquerrichtung zum Fahrzeugaufbau hin einwirkenden Stoßangriff die dabei entstehende Stoßenergie nicht absorbiert wird, wodurch mindestens das Gleitteil in seinem Führungsbereich sehr leicht verformt werden kann und damit seine Funktionsfähigkeit in Frage gestellt wird.

Aufgabe der Erfindung ist es daher, die Halterung der Endteile eines Stoßfängers der eingangs genannten Art derart auszubilden, daß bei einer Stoßbeanspruchung der Endteile in Fahrzeugquerrichtung zum Fahrzeugaufbau hin die Stoßenergie mindestens bis zu einer bestimmten Größe gut absorbiert wird.

Zur Lösung der Aufgabe sind die im kennzeichnenden Teil des Patentanspruchs 1 dargelegten Gestaltungsmerkmale vorgesehen.

Durch die am Aufnahmeteil oder am Gleitteil erfindungsgemäß vorgesehene Schrägfläche — wobei die Teile an ihren einander zugewandten freien Endabschnitten in gabelartigem Eingriff miteinander stehen — wird erreicht, daß, wenn sich die seitlichen Endteile des Stoßfängers bei einem auf sie einwirkenden Stoßangriff in Fahrzeugquerrichtung zum Fahrzeugaufbau hin verlagern, eines der freien Enden von Aufnahmeteil oder Gleitteil längs der Schrägfläche des jeweiligen anderen Teils gleitet, wodurch durch den dabei zwischen dieser und dem freien Ende wirksam werdenden, sich stetig erhöhenden Reibungswiderstand die in ein Endteil eingeleitete Stoßenergie ohne Beschädigungen der Endteile oder der Halterungen verzehrt wird.

Bei zwei einander gegenüberliegenden Schrägflächen, welche am Aufnahmeteil vorgesehen sind (Merkmal des Patentanspruchs 2), läßt sich der Reibungswiderstand und damit die Energieabsorption noch erheblich vergrößern. Ferner hat das zu den Endteilen des Stoßfängers hin offene, U-förmige Querschnittsprofil des Aufnahmeteils den Vorteil, daß das Gleitteil zur Montage des Stoßfängers rasch und mühelos in das Aufnahmeteil eingeschoben werden kann.

Durch die Merkmale der Patentansprüche 3 und 4, die Schrägflächen gewölbt auszubilden und an sie anschließend eine weitere Wölbung vorzusehen - wobei sich die tiefstliegende Stelle der Wölbungen im Längsmittelbereich der Schenkel befindet - wird erreicht, daß, wenn an den Außenseiten der Schenkel des Gleitteils eine elastische Zwischenschicht angeordnet und diese mit Vorspannung in das Aufnahmeteil eingesetzt ist (Merkmal des Patentanspruchs 6), die Endteile des Stoßfängers nach einer in sie eingeleiteten, auch schräg zur Fahrzeuglängsebene gerichteten Kraft bestrebt sind, sich selbsttätig in ihre Ruhelage zurückzuverlagern. Dabei ist auch keine weitere Befestigung der Endteile erforderlich.

Eine trapezförmige Gestaltung der elastischen Zwischenschicht und ihre Abrundung zur Oberseite hin (Merkmal des Patentanspruchs 7) hat dabei den Vorteil, daß sich Aufnahmeteil und Gleitteil ungehindert in mehreren Freiheitsgraden zueinander verlagern können. Das Aufnahmeteil und das Gleitteil können aus Leichtmetall gefertigt sein, so daß die Halterung insgesamt ein verhältnismäßig geringes Gewicht hat.

Durch Anordnung eines auf einer Abwinkelung der Karosserieseitenwand aufliegenden Tragwinkels am Aufnahmeteil (Patentanspruch 9) läßt sich in einfacher, stets wiederholbarer Weise exakt die Höhenlage der Endteile des Stoßfängers in Bezug zur Karosserie festlegen.

Andere Ausgestaltungen der Erfindung sind in weiteren Unteransprüchen gekennzeichnet.

Ein Ausführungsbeispiel der Erfindung ist in der Zeichnung dargestellt und wird im folgenden erläutert. Es zeigt:

Fig. 1 eine Draufsicht auf einen Stoßfänger,

Fig. 2 einen Schnitt längs der Linie II-II in Fig. 1 in größerem Maßstab,

Fig. 3 einen Schnitt längs der Linie III-III in Fig. 2,

Fig. 4 eine Ausschnittvergrößerung von Fig. 2,

Fig. 5 eine perspektivische Gesamtansicht der Befestigungsanordnung der seitlichen Endteile des Stoßfängers, wobei Aufnahmeteil und Gleitteil außer Eingriff stehen.

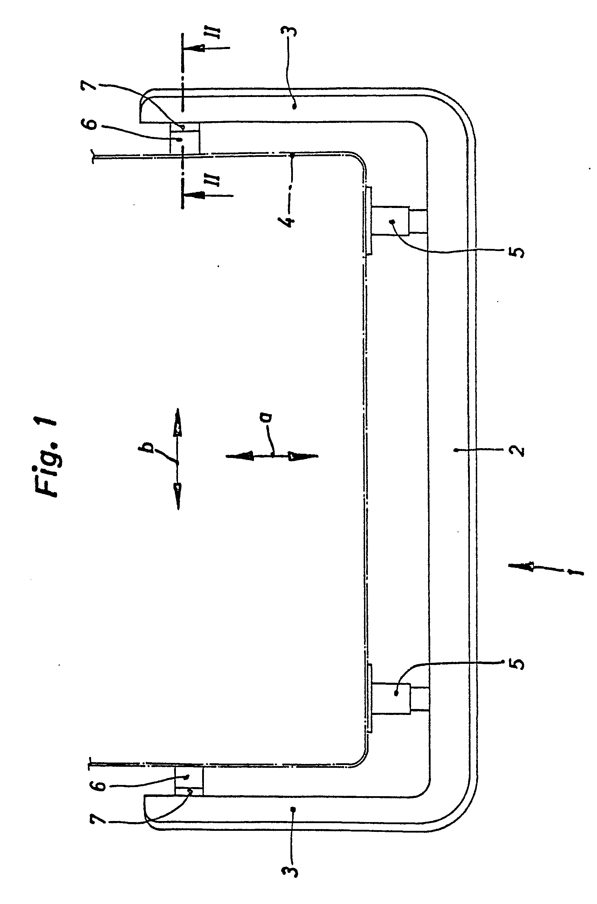

Der in Fig. 1 dargestellte Stoßfänger 1 besteht aus einem Mittelteil 2 und zwei sich einstückig an dieses anschließende seitliche Endteile 3, wobei das Mittelteil 2 von zwei, am Bug- und/oder Heckbereich eines Personenkraftwagens — dessen Fahrzeugaufbau mit 4 bezeichnet ist — angebrachten hydraulischen Stoßdämpfern 5 getragen wird; anstelle von diesen kann das Mittelteil 2 auch starr am Fahrzeugaufbau 4 befestigt sein.

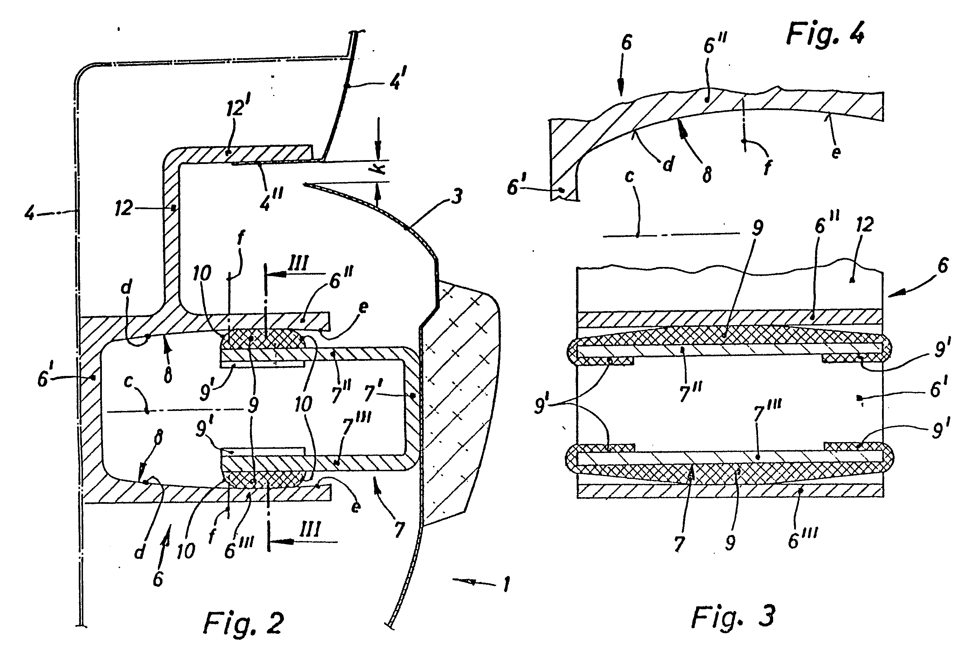

Wie in den Fig. 1 und 2 ersichtlich, sind die beiden Endteile 3 über ein Aufnahmeteil 6 und ein Gleitteil 7 — die zweckmäßigerweise aus Leichtmetall bestehen — vom Fahrzeugaufbau 4 getragen, wobei der Steg 6' des ein U-förmiges Querschnittsprofil aufweisenden Aufnahmeteils 6 am Fahrzeugaufbau 4 befestigt ist und dieses in Fahrzeugquerrichtung von letzterem wegragt. Das ebenfalls ein U-förmiges Querschnittsprofil aufweisende Gleitteil 7 ist gegenüberliegend vom Aufnahmeteil 6 mit seinem Steg 7' an jeweils einem Endteil 3 des Stoßfängers 1 befestigt, wobei die freien Endabschnitte der beiden Schenkel 7'', 7''' des Gleitteils 7 gabelartig von den freien Endabschnitten der beiden Schenkel 6'', 6''' des Aufnahmeteils 6 umgriffen werden.

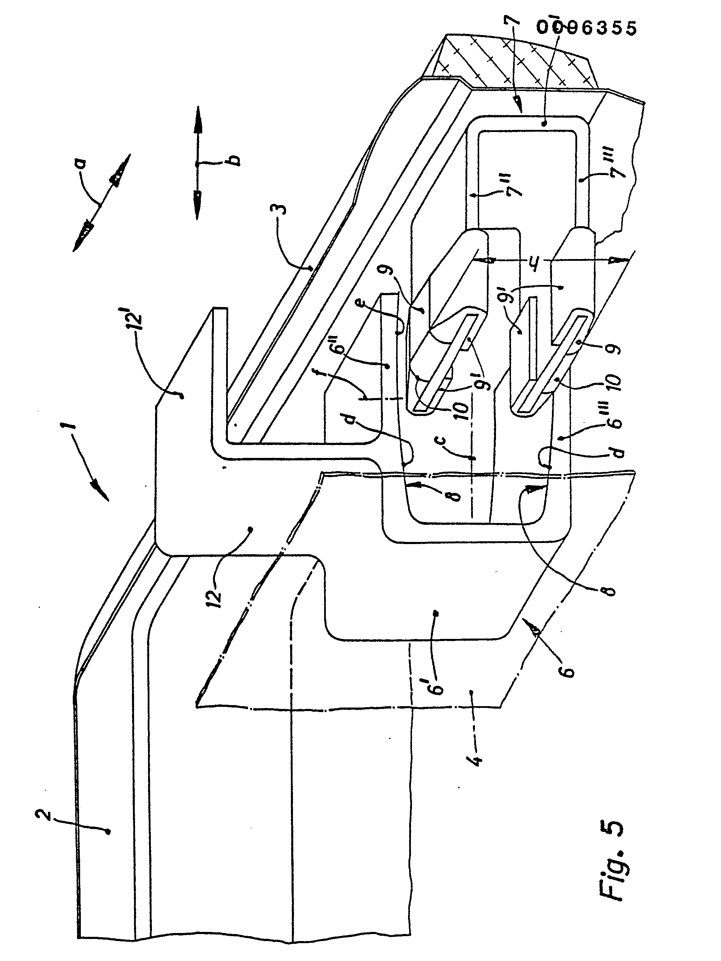

An der Innenseite der Schenkel 6'', 6''' des Aufnahmeteils 6 ist jeweils eine vom Mittelbereich der Längserstreckung der Schenkel 6'', 6''' (bei f) ausgehende Schrägfläche 8 (Fig. 2) vorgesehen, welche spiegelsymmetrisch zur Symmetrieebene c des U-förmigen Querschnittsprofils des Aufnahmeteils 6 hin geneigt sind und zu dessen Steg 6' verlaufen. Wie in Fig. 4 zu ersehen ist, sind die benachbart des Fahrzeugaufbaus 4 liegende Schrägflächen jeweils als eine sich in Fahrzeuglängsrichtung (Richtung des Doppelpfeils a) erstreckende (also in Bezug zur Symmetrieebene c konkave), erste Wölbung d ausgebildet, wobei sich an diese, vom Bereich der Längsmitte f der Schenkel 6'', 6''' an, eine zu deren freien Enden verlaufende, zweite Wölbung e stufenlos anschließt. Hierbei sind die ersten Wölbungen d stärker als die zweiten Wölbungen e bombiert ausgebildet, d. h. letztere haben einen größeren Krümmungsradius als die Wölbungen d.

Die freien Endabschnitte der beiden Schenkel 7'', 7''' des Gleitteils 7 sind jeweils mit einer aus gummielastischem Material bestehenden Zwischenschicht 9 versehen (Fig. 2, 3 und 5), die einander gegenüber liegend auf der Außenseite der Schenkel 7'', 7''' befestigt (aufgeklebt oder aufvulkanisiert) und trapezförmig (Fig. 3), bei auf letzteren aufliegender Grundfläche, gestaltet sind; ferner sind die einander gegenüberliegenden Stirnseiten der Zwischenschichten 9 als zu ihrer Oberseite verlaufende Abrundungen 10 ausgebildet, während die freien Endabschnitte 9' der Zwischenschichten 9 die Schenkel 7'', 7''' untergreifen. Der relativ weiche, druckelastische Kern der Zwischenschichten 9 — welcher aus gummielastischem Material besteht — ist von einer harten, gegen Reibungsbeanspruchung sehr widerstandsfähigen, also weitgehend verschleißfesten, Kunststoffhaut ummantelt.

Das Gleitteil 7 hat in seinem Herstellzustand im Bereich der Zwischenschichten 9 eine solche Gesamthöhe h, daß die Zwischenschichten 9 bei Montage des Stoßfängers 1 und damit bei Verbindung von dessen Endteilen 3 mit dem am Fahrzeugaufbau 4 befestigten Aufnahmeteil 6 mit Vorspannung zwischen dessen Schenkel 6'', 6''' einschiebbar sind. Da sich die Zwischenschichten 9 in Ruhelage der Endteile 3 des Stoßfängers 1 - wie Fig. 2 zeigt - im Übergangsbereich der an den Schenkeln 6'', 6''' vorgesehenen Wölbungen d und e befinden, können sie bei einer Stoßbeanspruchung des Mittelteils 2 (maximal entsprechend der Eintauchtiefe der Stoßdampfer 5) und bei dessen anschließendem Rückfedern in Fahrzeuglängsrichtung (Richtungen des Doppelpfeils a) innerhalb dem Übergangsbereich der Wölbungen d und e gleiten, wobei durch deren zur Symmetrieebene c vorspringenden außenliegenden Rander keine weitere Befestigung der Endteile 3 erforderlich ist.

Wird jedoch in die Endteile 3 ein in Fahrzeugquerrichtung zum Fahrzeugaufbau 4 hin gerichteter Stoßangriff eingeleitet, so wird über das Endteil 3 das Gleitteil 7 in Fahrzeugquerrichtung zur Fahrzeuglängsmittelebene hin (Richtungen des Doppelpfeils b) verlagert, wobei die Zwischenschichten 9 längs den an den Schenkeln 6'', 6''' vorgesehenen Schrägflächen 8 verschoben werden. Da diese zur Symmetrieebene c des Aufnahmeteils 6 hin geneigt sind, werden dabei die beiden aus gummielastischem Material bestehenden Zwischenschichten 9 stetig stärker und gleichgroß zusammengedrückt, sowie der vorhandene Reibungswiderstand an ihren mit den Schrägflächen 8 in Berührung stehenden Außenseiten stetig vergrößert, wodurch die in die Endteile 3 eingeleitete Stoßenergie gedämpft und bis zu einer bestimmten, nämlich einer kleineren bis mindestens mittleren Stoßbeanspruchung entsprechenden Größe ohne Beschädigung der Endteile 3 und deren Halterungen absorbiert wird. Hierbei federn gleichzeitig auch die freien Endabschnitte der Schenkel 7'', 7''' des Gleitteils 7 etwas zusammen und tragen damit zur Stoßenergieabsorbierung und Stoßdämpfung bei. Nachdem die Schrägflächen 8 jeweils als Wölbungen d ausgebildet sind, verläuft die Stoßenergieabsorbierung in einer progressiven Kennlinie. Ein weiterer Vorteil der Wölbungen d besteht darin, daß bei nicht mehr vorhandener Stoßbeanspruchung der Endteile 3 die Zwischenschichten 9 naturgemäß zurückfedern wobei sich auch der Reibungswiderstand vermindert und durch ihr dabei erfolgendes Gleiten an den möglichst glatten Wandungen der Wölbungen d in Fahrzeugquerrichtung bis in ihre Ruhelage (Übergangsbereich zwischen den Wölbungen d und e) bestrebt sind, die Endteile 3 selbsttätig in ihre Ruhelage zurückzuverlagern.

Da die außenliegenden Ränder der Wölbungen e zur Symmetrieebene c hin vorspringen, wird schließlich durch diese Rander die Verschiebung der Zwischenschichten 9 begrenzt, wenn sich diese in ihrer Ruhelage befinden. Nachdem die Zwischenschichten 9 trapezförmig gestaltet und an ihren Stirnseiten die Abrundungen 10 vorgesehen sind, können sie bei den geschilderten Verschiebungen in Fahrzeuglängs- und Fahrzeugquerrichtung, sowie schrägverlaufend zu diesen, vorteilhafterweise ungehindert verlagert werden. An den Übergangsbereichen von den Endteilen 3 zum Mittelteil 2 des Stoßfängers 1 sind Sollbiegestellen vorgesehen, durch welche die Endteile 3 relativ zum Mittelteil 2 verlagert werden können.

Vom obenliegenden Schenkel 6'' des Aufnahmeteils 6 steht ein sich lotrecht nach oben erstreckender Tragwinkel 12 ab, dessen waagrecht verlaufender Schenkel 12' an einer nach innen gerichteten Abwinkelung 4'' der Karosserieseitenwand 4' befestigt ist. Dabei ist die Höhenerstreckung des Tragwinkels 12 derart bemessen, daß bei montiertem Aufnahmeteil 6 zwischen der Abwinkelung 4'' und der dieser zugewandten Oberkante der Endteile 3 ein so großer Luftspalt k vorhanden ist, daß deren ungehinderte Verschiebbarkeit in Fahrzeuglängs- und Fahrzeugquerrichtung gewährleistet ist. Durch den am Aufnahmeteil 6 vorgesehenen Tragwinkel 12 ist damit exakt und stets wiederholbar die höhenmäßige Lage der Endteile 3 des Stoßfängers 1 in Bezug zum Fahrzeugaufbau 4 festgelegt. In Ruhelage der Endteile 3 entspricht das Abstandsmaß zwischen deren Oberkante und dem zugewandten Tragwinkel 12 etwa dem Maß zwischen den freien Enden der Schenkel 7'', 7''' des Gleitteils 7 und dem Steg 6' des Aufnahmeteils 6.

Selbstverständlich kann im Rahmen der Erfindung auch das Gleitteil im Bereich seines Steges mit Schrägflächen versehen sein.

## Patentansprüche

1. Stoßfänger (1) für Kraftfahrzeuge, insbesondere für einen Personenkraftwagen, im wesentlichen bestehend aus einem bei einem Aufprall sich in Fahrzeuglängsrichtung verschiebenden Mittelteil (2) und zwei sich an dieses anschließende, seitliche Endteil (3), die jeweils von einem vom Fahrzeugaufbau (4) in Fahrzeugquerrichtung wegragenden Aufnahmeteil (6) und einem seinerseits an jeweils einem Endteil (3) angebrachten Gleitteil (7) gehalten sind, wobei ein Teil das andere gabelartig so umgreift, daß die Endteile (3) sowohl in Fahrzeuglängs- als auch in Fahrzeugquerrichtung verschiebbar sind, dadurch gekennzeichnet, daß das Aufnahmeteil (6) oder das Gleitteil (7) wenigstens eine, zur Symmetrieebene des Gabelmauls hin geneigte und zum Fahrzeugaufbau (4) bzw. zum Endteile (3) verlaufende Schrägfläche (8) aufweist.

2. Stoßfänger nach Anspruch 1, dadurch gekennzeichnet, daß das Aufnahmeteil (6) ein U-förmiges Querschnittsprofil aufweist, wobei an der Innenseite seiner beiden Schenkel (6'', 6''') jeweils eine zu seiner Symmetrieebene (c) hin geneigte Schrägfläche (8) vorgesehen ist, welche jeweils vom Mittelbereich der Längserstreckung der Schenkel ausgehen (bei f) und spiegelsymmetrisch zu dem am Fahrzeugaufbau (4) befestigten Steg (6') des U-förmigen Querschnittsprofils hin verlaufen.

3. Stoßfänger nach Anspruch 2, dadurch gekennzeichnet, daß die Schrägflächen (8) des Aufnahmeteils (6) jeweils als eine in Fahrzeuglängsrichtung verlaufende Wölbung (d) ausgebildet sind.

4. Stoßfänger nach Anspruch 3, dadurch gekennzeichnet, daß sich an die benachbart des Fahrzeugaufbaus (4) liegende, erste Wölbung (d) des Aufnahmeteils (6) jeweils eine zu den freien Enden von dessen Schenkeln (6'', 6''') verlaufende, zweite Wölbung (e) anschließt.

5. Stoßfänger nach Anspruch 4, dadurch gekennzeichnet, daß die ersten Wölbungen (d) starker als die zweiten Wölbungen (e) bombiert ausgebildet sind.

6. Stoßfänger nach Anspruch 1, dessen ein U-förmiges Querschnittsprofil aufweisendes Gleitteil mit dem Aufnahmeteil über eine aus Kunststoff oder dgl. bestehende Zwischenschicht zusammenwirkt, wobei der Steg des Querschnittsprofils dem Endteil zugewandt ist, dadurch gekennzeichnet, daß der Steg (7') des Gleitteils (7) im Bereich des Aufnahmeteils (6) unmittelbar am Endteil (3) befestigt ist und ferner die Zwischenschicht (9) jeweils druckelastisch ausgebildet sowie an der Außenseite der freien Endabschnitte der beiden Schenkel (7'', 7''') des Gleitteils (7) vorgesehen ist und dieses dabei im Herstellzustand eine solche Gesamthöhe (h) hat, daß seine Zwischenschichten mit Vorspannung zwischen die Schenkel (6'', 6''') des Aufnahmeteils einsetzbar sind.

7. Stoßfänger nach Anspruch 6, dadurch gekennzeichnet, daß die Zwischenschichten (9) auf die freien Enden der Schenkel (7'', 7''') des Gleitteils (7) gesehen trapezförmig gestaltet und ihre beiden Stirnseiten als zu ihrer Oberseite verlaufende Abrundungen (10) ausgebildet sind.

8. Stoßfänger nach Anspruch 6, dadurch gekennzeichnet, daß die Zwischenschichten (9) aus einem relativ weichen Kern aus gummielastischem Material bestehen und dieser von einer harten Kunststoffhaut ummantelt ist.

9. Stoßfänger nach Anspruch 1, dadurch gekennzeichnet, daß von der Oberseite des Aufnahmeteils (6) ein Tragwinkel (12) sich lotrecht nach oben erstreckend absteht, dessen waagrecht verlaufender Schenkel (12') an einer einwärts weisenden Abwinkelung (4'') der Karosserieseitenwand (4') befestigt ist, wobei zwischen der Abwinkelung und der Oberkante der Endteile (3) des Stoßfängers (1) ein Luftspalt (k) besteht.

## Revendications

1. Pare-chocs (1) pour véhicules automobiles, en particulier pour voitures particulières, se composant essentiellement d'une partie médiane (2) se déplaçant dans le sens longitudinal du véhicule lors d'une collision, et de deux parties d'extrémités (3) latérales se rattachant à cette partie médiane (2), qui sont maintenues chacune à partir d'une partie d'absorption (6) faisant saillie à partir de la carrosserie (4) dans le sens transversal et sur une glissière (7) rapportée à chacune des parties d'extrémités (3), où une partie de l'autre en forme de fourchette s'engage de telle sorte qu'au moins la partie absorbante (6) où la glissière (7) soit inclinée par rapport au plan de symétrie de l'entredent de la fourchette et comporte une surface oblique s'étendant vers la carrosserie (4) du véhicule ou vers les extrémités (3).

2. Pare-chocs selon la revendication 1, caractérisé en ce que la partie absorbante (6) présente un profil de section en forme de U, où sur chacun des côtés intérieurs de ses branches (6'', 6''') est prévue une surface oblique (8) inclinée sur le plan de symétrie c, s'étendant chacune depuis la zone médiane de l'extension longitudinale des branches (désignées par f) et avec une, symétrie spéculaire par rapport à l'entretoise (6') fixée à la carrosserie (4) du profil de section en U.

3. Pare-chocs selon la revendication 2, caractérisé en ce que les surfaces obliques (8) de la partie absorbante (6) sont chacune sous forme de surfaces courbes d s'étendant dans le sens longitudinal du véhicule.

4. Pare-chocs selon la revendication 3, caractérisé en ce que, sur la première courbure d de la partie absorbante se trouvant au voisinage de la carrosserie (4) du véhicule, se raccorde une seconde surface courbe e s'étendant vers les extrémités libres de ses branches (6'', 6''').

5. Pare-chocs selon la revendication 4, caractérisé en ce que les premières surfaces courbes d présentant un bombé plus prononcé que les secondes e).

6. Pare-chocs selon la revendication 1, dont une glissière (7) présentant un profil de section en forme de U coopère avec la partie absorbante par une couche intermédiaire constituée de matière synthétique ou analogue, où l'entretoise du profil de section en U fait face à l'extremité, caractérisé en ce que l'entretoise (7') de la glissière (7) est fixée dans la zone de la partie absorbante (6) directement à l'extrémité (3), et en outre, la couche intermédiaire (9) est élastique sous la pression et est munie sur le côté extérieur des sections d'extrémités libres des deux branches (7'', 7''') de la glissière (7), et celle-ci posséde en outre à l'état de fabrication une hauteur totale h telle que ses couches intermédiaires peuvent être introduites avec precontrainte entre les branches (6'', 6''') de la partie absorbante (6).

7. Pare-chocs selon la revendication 6, caractérisé en ce que les couches intermédiaires (9) se présentent sous forme trapézoïdale sur les extrémités libres des branches (7'', 7''') de la glissière (7) et leurs deux côtés frontaux sont sous forme d'arrondis s'étendant vers leur côté supérieur.

8. Pare-chocs selon la revendication 6, caractérisé en ce que les couches intermédiaires (9) se composent d'un coeur relativement mou en matériau élastomère et celui-ci est entouré d'une peau en matériau élastomère et celui-ci est entouré d'une peau en matériau synthétique dur.

9. Pare-chocs selon la revendication 1, caractérisé en ce que, depuis le côté superieur de la partie absorbante (6), part une cornière porteuse (12) s'étendant verticalement vers le haut, dont la branche s'étendant horizontalement (12') est fixée sur une cornière (4'') de la paroi latérale de la carrosserie (4') où, entre la cornière et le bord supérieur des extrémités (3) du pare-chocs (1), se forme un intervalle d'air k.

**Claims**

1. A bumper bar (1) for motor vehicles, especially for a passenger car, comprising essentially a middle part (2) which shifts in the longitudinal direction of the vehicle in the case of a collision and two lateral end parts (3), adjoining the middle part, which are each held by a mounting part (6) protruding away from the vehicle body (4) in the transverse direction of the vehicle and by a sliding part (7) fitted on each end part (3) with one part gripping in a fork manner around the other in such a way that the end parts (3) are displaceable in both the longitudinal and transverse directions of the vehicle, characterised in that the mounting part (6) or the sliding part (7) comprises at least one sloping face (8) inclined to the plane of symmetry of the fork mouth and extending to the vehicle body (4) or to the end part (3) respectively.

2. A bumper bar according to Claim 1, characterised in that the mounting part (6) has a U-shaped cross-sectional profile wherein a sloping face (8) inclined towards its plane (c) of symmetry is provided on the inner side of each of its two legs (6'', 6'''), which sloping faces issue each from the middle region of the longitudinal extent of the legs (at f) and extend in mirror symmetry to the crosspiece (6'), secured on the vehicle body (4), of the U-shaped cross-sectional profile.

3. A bumper bar according to Claim 2, characterised in that the sloping faces (8) of the mounting part (6) are each formed as an arch (d) extending in the longitudinal direction of the vehicle.

4. A bumper bar according to Claim 3, characterised in that the first arch (d) of the mounting part (6), lying adjacent to the vehicle body (4), is adjoined in each case by a second arch (e) extending to the free ends of the legs (6'', 6''') of the mounting part (6).

5. A bumper bar according to Claim 4, characterised in that the first arches (d) are formed with a tighter curvature than the second arches (e).

6. A bumper bar according to Claim 4, the sliding part of which has a U-shaped cross-sectional profile and cooperates with the mounting part through an interlayer formed of synthetic plastics material or the like, with the cross-piece of the cross-sectional profile facing the end part, characterised in that the cross-piece (7') of the sliding part (7) is secured directly on the end part (3) in the region of the mounting part (6) and, furthermore, the interlayer (9) is in each case made elastic in compression and is provided on the outside of each of the free end sections of the two legs (7'', 7''') of the sliding part (7) with the latter, when in the manufactured condition, having such an overall height (h) that its interlayers are insertable with initial stress between the legs (6'', 6''') of the mounting part.

7. A bumper bar according to Claim 6, characterised in that the interlayers (9), when seen towards the free ends of the legs (7'', 7''') of the sliding part (7), are of trapezium-shaped configuration and their two end faces are formed as rounded portions (10) extending to the upper sides.

8. A bumper bar according to Claim 6, characterised in that the interlayers (9) comprise a relatively soft core of rubber-elastic material and this is surrounded by a hard skin of synthetic plastics material.

9. A bumper bar according to Claim 1, characterised in that, from the upper side of the mounting part (6), a protruding carrier angle piece (12) extends vertically upwards, the horizontally-extending leg (12') of which is secured to an inwardly-directed angled-off portion (4'') of the bodywork side wall (4'), while there is an air gap (k) between the angled-off portion and the upper edge of the end parts (3) of the bumper bar (1).

Fig. 1

Fig. 4

Fig. 2

Fig. 3

0 096 355

Fig. 5

0 096 355